(19) Europäisches Patentamt
European Patent Office
Office européen des brevets

(11) Veröffentlichungsnummer: **0 301 412**
**A2**

(12) # EUROPÄISCHE PATENTANMELDUNG

(21) Anmeldenummer: **88111766.7**

(51) Int. Cl.4: **B01D 19/04**

(22) Anmeldetag: **21.07.88**

(30) Priorität: **30.07.87 DE 3725236**

(43) Veröffentlichungstag der Anmeldung:
**01.02.89 Patentblatt 89/05**

(84) Benannte Vertragsstaaten:
**AT BE CH DE ES FR GB IT LI NL**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Asbeck, Adolf**
**Am Langen Weiher 51**
**D-4000 Düsseldorf 13(DE)**
Erfinder: **Meffert, Alfred, Dr.**
**Marie-Curie-Strasse 10**
**D-4019 Monheim(DE)**
Erfinder: **Rombey, Günter**
**Jülicher Strasse 19**
**D-4048 Grevenbroich 1(DE)**
Erfinder: **Schmid, Karl-Heinz, Dr.**
**Stifterstrasse 10**
**D-4020 Mettmann(DE)**

(54) **Schütt-und rieselfähige Zusatzmittel zur Schaumverhütung bzw. Schaumdämpfung.**

(57) Zur Schaumverhütung, insbesondere in Wasch- und Reinigungsmitteln, eignet sich ein Mittel, das aus einer speziell zusammengesetzten Trägersubstanz und einer daran adsorbierten Silikon-Verbindung besteht.

Die Trägersubstanz enthält einen in Wasser löslichen bzw. dispergierbaren Celluloseether, anorganische wasserlösliche Salze sowie hochschäumende Aniontenside aus der Klasse der Alkylsulfate, Alkylethersulfate und Alpha-Sulfobernsteinsäureester, die in Pulverform in die Trägersubstanzen eingearbeitet sind.

EP 0 301 412 A2

## Schütt- und rieselfähige Zusatzmittel zur Schaumverhütung bzw. Schaumdämpfung

Die Verwendung von Organopolysiloxan-Verbindungen zur Bekämpfung der Schaumbildung in insbesondere wässrigen Phasen ist eine allgemein bekannte und heute in großem Umfang eingesetzte Maßnahme auf den verschiedenartigsten Einsatzgebieten, die eine Schaumdämpfung oder Schaumverhütung fordern. Besondere Schwierigkeiten treten bekanntlich überall dort auf, wo tensidhaltige insbesondere wässrige Phasen mechanischer Einwirkung unterliegen, die zur Schaumbildung führt. Ein besonders wichtiges Einsatzgebiet findet sich bei den wässrig-tensidischen Wasch- und Reinigungsflotten. So bedürfen beispielsweise Wasch- und Reinigungsmittel für die Textilreinigung des Zusatzes von Schaumdämpfungsmitteln, wenn sie für den Einsatz in den heute üblichen Maschinentypen geeignet sein sollen.

Bekannt ist es insbesondere bei pulverförmigen und/oder körnigen Textilwaschmitteln der heute handelsüblichen Art feste schütt- und rieselfähige Zusatzmittel mit schaumdämpfender bzw. schauminhibierender Wirkung beizumischen. Diese Zusatzmittel enthalten üblicherweise die Organopolysiloxan-Verbindungen aufgetragen auf ein pulverförmiges wasserlösliches und/oder wasserdispergierbares Trägersubstrat. Dieses Trägersubstrat seinerseits ist gebildet aus einem Anticaking-Mittel - in der Regel ein wasserlösliches und/oder wasserdispergierbares Substrat auf Cellulosebasis - das in Abmischung mit wasserlöslichen anorganischen Salzen und gewünschtenfalls zusätzlichen Dispergierhilfsmitteln vorliegt. Als wasserlösliche anorganische Salze haben insbesondere Natriumsulfat und/oder Natriumcarbonat aber auch Natriumtripolyphosphat, Natriumphosphat und dergleichen Bedeutung. Als Dispergierhilfsmittel können in dieses Trägersubstrat Komponenten mit tensidischer Wirkung eingearbeitet sein.

Die Erfindung geht von der überraschenden Feststellung aus, daß besonders wirkungsvolle Schaumverhütungsmittel der geschilderten Art, die im allgemeinen Sprachgebrauch auch als Schaumbremsen bezeichnet werden, dann erhalten werden können, wenn in das Trägersubstrat ganz bestimmt ausgewählte Aniontenside eingearbeitet sind, die sich in Abwesenheit der schaumdämpfenden Organopolysiloxan-Verbindungen durch eine besonders hohe Schaumbildungstendenz auszeichnen.

Gegenstand der Erfindung sind dementsprechend in einer ersten Ausführungsform feste schütt- und rieselfähige Zusatzmittel zur Schaumverhütung bzw. Schaumdämpfung insbesondere für den Einsatz in Wasch- und Reinigungsmitteln für Textilien, enthaltend Silikonverbindungen mit schaumdämpfender bzw. schauminhibierender Wirkung, aufgetragen auf ein pulverförmiges wasserlösliches und/oder wasserdispergierbares Trägersubstrat auf Cellulosebasis in Abmischung mit wasserlöslichen anorganischen Salzen und Dispergierhilfsmitteln auf Tensidbasis, wobei das Kennzeichen der Erfindung darin liegt, daß in das Trägersubstrat als ausgewählte Dispergierhilfsmittel hochschäumende Aniontenside in Pulverform aus den nachfolgenden Klassen eingearbeitet sind: Alkylsulfate, Alkylethersulfate und/oder Alpha-Sulfobernsteinsäure-Ester.

Innerhalb dieser drei Tensidklassen kommt besondere Bedeutung den durch besonders hohe Schaumbildungstendenz gekennzeichne ten Alkylsulfaten zu, wobei innerhalb dieser Gruppe gerade solche Vertreter besonders bevorzugt sind, die sich durch die stärkste Schaumbildungstendenz auszeichnen. Einzelheiten hierzu finden sich in den nachfolgenden Angaben der Erfindungsbeschreibung.

Es ist durchaus als überraschend anzusehen, daß gerade solchen Hilfsstoffen die stärkste Wirkungssteigerung bei der angestrebten Schaumdämpfung zukommt, die selber innerhalb der breiten Klasse von tensidischen Dispergierhilfsmitteln die am stärksten ausgeprägte Fähigkeit zur Schaumbildung besitzen. Im Gegensatz zur erfindungsgemäßen Erkenntnis hätte man durchaus erwarten können, daß die Mitverwendung dieser extrem stark schäumenden Tensidverbindungen zur ernsthaften Minderung und/oder Behinderung des angestrebten Dämpfungseffektes führt.

Die erfindungsgemäß eingesetzten aniontensidischen Komponenten können sich von Fettalkoholen natürlichen und/oder synthetischen Ursprungs ableiten. Sie sind dabei verzweigt oder unverzweigt und gegebenenfalls auch ungesättigt.

Die Klasse der hier interessierenden Alkylsulfate leitet sich in der bevorzugten Ausführungsform von Alkoholen mit einer Kettenlänge von $C_{8-18}$ und insbesondere einer Kettenlänge von $C_{8-14}$ ab. Besonders geeignet sind Fettalkoholsulfate des Kettenbereichs von $C_{10-14}$ wobei hier den Alkylsulfaten des Kokosfettalkohols besondere Bedeutung zukommt.

Alkylethersulfate leiten sich bekanntlich von den Umsetzungsprodukten der zuvor genannten Alkohole zunächst mit Alkylenoxid und insbesondere mit Ethylenoxid unter nachfolgender Bildung des Schwefelsäurehalbesters ab. Erfindungsgemäß bevorzugte Alkylethersulfate sind solche des Kohlenstoffkettenbereichs von $C_{8-18}$ und 1-4 Ethylenoxid-Gruppen. Auch die erfindungsgemäß bevor zugten Alpha-Sulfobernsteinester enthalten in den Ester- Alkoholgruppen Kettenlängen von $C_{8-18}$.

Die erfindungsgemäß eingesetzten pulverförmigen Aniontenside der zuvor beschriebenen Klassen

liegen in der bevorzugten Ausführungsform als Alkali-, Amonium- und/oder Aminsalze vor. Besondere Bedeutung kommt den entsprechenden Alkalisalzen und hier insbesondere den entsprechenden Natriumsalzen zu.

In einer wichtigen Ausgestaltung der Erfindung kommt auch der Auswahl der anorganischen Salze in dem Träger besondere Bedeutung zu. Es hat sich gezeigt, daß die Gegenwart von Natriumcarbonat substantiell zur Schaumdämpfung beiträgt, so daß in dieser Ausführungsform der Erfindung als anorganische Salzkomponente wenigstens anteilsweise Natriumcarbonat eingesetzt wird. Daneben können andere anorganische lösliche Salze insbesondere Natriumsulfat mitverwendet werden. Bevorzugt ist jedoch, daß bei Einsatz von sochen Salzgemischen das Natriumcarbonat wenigstens etwa 20 Gewichtsprozent, vorzugsweise wenigstens etwa 40 Gewichtsprozent - jeweils bezogen auf das Gesamtgewicht der anorganischen Salze - ausmacht.

Geeignete Zusatzmittel enthalten - bezogen auf das gesamte feste schütt- und rieselfähige Zusatzmittel - beträchtliche Mengen der hochschäumenden pulverförmigen Aniontenside, wobei insbesondere der Bereich von 3-20 Gewichtsprozent und bevorzugt der Bereich von etwa 5-10 Gewichtsprozent in Betracht kommt. Zusammen damit können die festen schütt- und rieselfähigen Zusatzmittel der Erfindung in der bevorzugten Ausführungsform etwa 3-15 Gewichtsprozent der schaumdämpfenden Silikonverbindungen und insbesondere etwa 5-10 dieser Silikonverbindungen enthalten. Jeweils den Rest der erfindungsgemäßen Zusatzmittel bilden die eingangs genannten wasserlöslichen und/oder wasserdispergierbaren Komponenten organischer Art, insbesondere auf Cellulosebasis in Abmischung mit wasserlöslichen anorganischen Salzen der genannten Art. In einer besonders bevorzugten Ausführungsform enthält das erfindungsgemäße schaumdämpfende Zusatzmittel etwa 5-10 Gewichtsprozent der Organopolysiloxan-Verbindungen zusammen mit etwa 5-10 Gewichtsprozent der pulverförmigen hochschäumenden Aniontensidkomponenten und zu 80-90 Gewichtsprozenten die restlichen Komponenten des Trägersubstrats.

Besonders geeignete Organopolysiloxan-Verbindungen sind Silikonöle der nachfolgenden allgemeinen Formel I,

$$CH_3-\underset{CH_3}{\overset{CH_3}{Si}}-O\;\;\underset{CH_3}{\overset{CH_3}{Si}}-O_{\,x}\;\;\underset{CH_3}{\overset{CH_3}{Si}}-CH_3 \qquad (I)$$

wobei x im Zahlenmittel einen Wert von etwa 50-2500, vorzugsweise etwa 500-1000 bedeutet. Diese Siloxanverbindungen können auch in ansich bekannter Weise mit gefällter oder pyrogener Kieselsäure aktiviert sein, wobei diese Kieselsäurekomponente vorzugsweise in Mengen von etwa 2-12 Gewichtsprozent vorliegen kann.

In einer bevorzugten Ausführungsform liegt als wasserlösliche und/oder wasserdispergierbare Cellulose-Komponente Carboxymethylcellulose und/oder Methylcellulose vor. Bevorzugte anorganische Salze sind wie zuvor angegeben Natriumcarbonat und gegebenenfalls Natriumsulfat, die in Mischung mit den zuvor genannten organischen Polymerverbindungen vorliegen. Dabei liegt das Gewichtsverhältnis dieser organischen und anorganischen Komponenten zueinander in einer weiterhin bevorzugten Ausführungsform etwa im Bereich von 70:30 bis 30:70.

In einer weiteren besonders wichtigen Ausführungsform der Erfindung sind die schaumdämpfenden Zusatzmittel der bisher beschriebenen Art dadurch gekennzeichnet, daß sie zusätzlich mit alkalilöslichen und/oder wässrig-alkalisch dispergierbaren synthetischen Polymerverbindungen versetzt und gegebenenfalls wenigstens anteilsweise umhüllt sind. Durch Mitverwendung dieser synthetischen Polymerverbindungen, die - wie nachfolgend noch beschrieben - insbesondere in einer letzten Verfahrensstufe auf das erfindungsgemäße Zusatzmittel aufgebracht werden können, kann die Lagerstabilität der erfindungsgemäßen Schaumbremsen substantiell erhöht werden.

Als Polymerverbindungen der hier genannten Art sind besonders geeignet im alkalischen Bereich lösliche und/oder redispergierbare, Carbonsäuregruppen enthaltenden Copolymere aus Vinylestern, Acrylsäureestern, Methacrylsäureestern oder Vinylethern einerseits und copolymerisierbaren ungesättigten Carbonsäuren andererseits. Bevorzugt sind hier Copolymere aus Vinylacetat und damit copolymerisierbaren ungesättigten niederen Carbonsäuren, wobei für die zuletzt genannte Klasse insbesondere Acrylsäure, Methacrylsäure, Crotonsäure oder Itaconsäure, Maleinsure- und/oder Fumarsäurehalbester zu nennen sind.

Copolymere dieser ungesättigten Säuren mit insbesondere Vinylacetat, aber auch mit Acryl- und/oder Methacrylsäureestern können darüber hinaus noch weitere wasserlösliche Monomere, wie Acrylnitril oder Acrylamid oder auch wasserunlösliche Comonomere wie Styrol enthalten. Der Fachmann wird die Copolymeren bezüglich der Glastemperatur und Filmbildungstemperatur so einstellen, daß sie bevorzugt unter Verarbeitungsbedingungen oberhalb ihrer Glastemperatur und vorzugsweise auch oberhalb ihrer minimalen Filmbildungstemperatur vorliegen. Dazu werden nach dem allgemeinen Fachwissen der Polymerchemie Comonomere, die Homopolymere mit hoher Glastemperatur bilden, mit Comonomeren, die Homopolymere mit tieferer Glastemperatur bilden, copolymerisiert.

Besondere Bedeutung kann in dem hier diskutierten Zusammenhang einem Copolymerisat aus Vinylacetat und Crotonsäure zukommen. Dieses Polymere kann in Dispersionsform zum Einsatz kommen, wobei der Dispersion Schutzkolloide z. B. Polyacrylamid zugesetzt sein können. Bevorzugte Copolymerisate können überwiegende Mengen an Vinylacetat enthalten, die z.B. wenigstens 70 Mol %, bevorzugt wenigstens 80 Mol % und insbesondere etwa 90 bis 95 Mol % ausmachen, während die Menge der Crotonsäure wenigstens etwa 1 Mol % beträgt.

Die Menge dieser synthetischen Polymerverbindungen liegt - bezogen auf das Gesamtprodukt - bevorzugt unterhalb 10 Gewichtsprozent und insbesondere unterhalb etwa 7 Gewichtsprozent.

Nach der bevorzugten Ausführungsform der Erfindung werden die schaumdämpfenden Zusatzmittel durch mechanisches Vermischen der Komponenten insbesondere im Bereich der Raumtemperatur hergestellt. Hierbei wird bevorzugt die folgende Reihenfolge in der Zugabe zur Mischungsvorrichtung eingehalten: Vormischen der organischen und anorganischen Komponenten des Trägersubstrats, Zugabe und Einmischung der pulverförmigen hochschäumenden aniontensidischen Komponenten im Sinne der erfindungsgemäßen Lehre, Zugabe der Silikonverbindung und abschließendes Einarbeiten der synthetischen Polymerverbindung.

Als erfindungsgemäßes Verfahrensprodukt fällt ein selbständig lagerfähiges Entschäumer-Pulver an, das beispielsweise pulverförmigen handelsüblichen Textilwaschmittelgemischen zugesetzt sich durch eine besonders starke Schaumbremsenwirkung auszeichnet. Bereits geringe Mengen von beispielsweise etwa 0, bis 4 Gewichtsprozent und insbesondere von etwa 0,2 bis 2,5 Gewichtsprozent des erfindungsgemäßen Entschäumungspulvers im Fertigwaschmittel liefern den gewünschten schaumdämpfenden Effekt. Erfindungsgemäß hergestellte schütt- und rieselfähige schaumdämpfende Zusatzmittel können Schüttgewichte etwa im Bereich von 550-600 g/l aufweisen. Die Kornverteilung kann der entsprechenden Beschaffenheit des pulverförmigen bzw. rieselfähigen Waschmittels angepaßt werden, so daß auch aus dieser Sicht im Fertigwaschmittel keine Entmischungsprobleme zu befürchten sind.

Gegenstand der Erfindung ist in einer weiteren Ausführungsform die Verwendung der zuvor beschriebenen festen schütt- und rieselfähigen Zusatzmittel der genannten Art als Schaumbremse in insbesondere festen pulverförmigen bzw. rieselfähigen Textilwasch- und Reinigungsmitteln übliche Zusammensetzung.

## Beispiele

In den nachfolgenden Beispielen werden die Herstellung der Entschäumer, der Einsatz und ihre Austestung zur Bestimmung der jeweiligen Entschäumungswirkung beschrieben. Die Vergleichsbeispiele beschreiben die Herstellung, den Einsatz und die Austestung von vergleichbaren ähnlichen und insbesondere bezüglich der eingesetzten Silikonverbindungen identischen Entschäumern, die jedoch den essentiellen Bestimmungselementen der Erfindung nicht entsprechen. Für die erfindungsgemäßen Beispiele und die Vergleichsbeispiele gelten die nachfolgenden übereinstimmenden Angaben zu Herstellung, Einsatz und Austestung der jeweiligen Substanzen:

### Entschäumerherstellung

Die organischen und anorganischen Komponenten des Trägersubstrats - Carboxymethylcellulose/Methylcellulose, Natriumcarbonat, Natriumsulfat sowie jeweils eingesetztes Tensid - werden in einem Mischer (z.B. einem Lödige-Mischer) 15 Minuten bei Raumtemperatur vorgemischt. Dann wird das Silikonöl zugegeben und weitere 15 Minuten bei Raumtemperatur gemischt. Soweit vorgesehen, erfolgt abschließend die Zugabe der filmbildenden Polymersubstanz und in diesen Fällen ein nochmaliges Mischen für den Zeitraum von 15 Minuten bei Raumtemperatur.

Man erhält in allen Fällen ein homogenes, freifließendes Pulver ohne Klumpenbildung.

Einsatz der Entschäumer:

Die Entschäumer werden pulverförmigen Textilwaschmittelgemischen zugegeben, wobei in den nachfolgenden Beispielen gemäß der Erfindung und den Vergleichsbeispielen Art und Menge des jeweiligen Entschäumers sowie die Zusammensetzung der eingesetzen Waschmittelkompositionen angegeben sind.

Austestung der Entschäumungswirkung:

Es wird in einer Labortestwaschmaschine gearbeitet, die speziell für die Prüfung des Schaumverhaltens von Wasch- und Waschhilfsmitteln entwickelt worden ist.

Die Testvorrichtung besteht aus einem Laugenbehälter und einer im Sinne üblicher Trommelwaschmaschinen darin angeordneten gelochten Trommel. Die Schaumentwicklung wird durch die Plexiglas-Vorderseite der Apparatur verfolgt und ist an einer Notenskala ablesbar. Bei starker Schaumentwicklung steigt der Schaum in einen Aufsatz, was dem Überschäumen einer Haushaltswaschmaschine entspricht. Die Vorrichtung ist mit einem fest installierten Wasserzu- und ablauf sowie mit einer Steuereinheit versehen, mit der die Heizleistung sowie die Trommeldrehung beziehungsweise der Trommelstillstand geregelt werden. Heizleistung und Mechanik sind variierbar und den Bedingungen der Haushaltswaschmaschine anzugleichen.

In die Trommel wird jeweils ein Stück Polyester-Gardine als Wäschebeladung eingelegt. Der Laugenbehälter wird bis zur Norm-Markierung mit Gebrauchswasser gefüllt. Nach Zugabe des Waschmittels wird unter den gewählten Normbedingungen gewaschen.

Während des Waschgangs wird die Schaumhöhe an der Notenskala abgelesen. Die höchste Schaumentwicklung innerhalb der Vorrichtung entspricht der Note 6. Eine höhere Schaumentwicklung als Note 6 entspricht einem Überschäumen in üblichen deutschen Haushaltswaschmaschinen.

Für die Beurteilung der Entschäumerwirkung leitet sich aus dieser Versuchsanordnung das Folgende ab: Die Entschäumerwirkung ist umso stärker, je niedriger die an der Schaumskala abgelesene Ziffer ist.

Die Bestimmung der Entschäumungswirkung erfolgt in allen in den nachfolgenden Beispielen und Vergleichsbeispielen angegebenen Fällen bei den drei Waschtemperaturen von 30 °C, 60 °C und 90 °C. Weiterhin wird in allen Fällen die Austestung der Entschäumungswirkung unmittelbar nach Herstellung des jeweiligen Entschäumers durchgeführt. In den Beispielen 1 und 2 wird darüber hinaus die Entschäumerwirkung nach einer Lagerung des jeweiligen Entschäumers über einen Zeitraum von einem Monat und über den Zeitraum von 3 Monaten bestimmt. Das Vergleichsbeispiel 1 gibt vergleichbare Daten für die Entschäumerwirkung des hier getesteten Materials nach einer Lagerung von drei Monaten.

Beispiele 1 und 2

Dem erfindungsgemäßen "Entschäumer 1" und "Entschäumer 2" werden aus den folgenden Komponenten zusammengemischt:
40 Gewichtsprozent Natriumcarbonat wasserfrei
10 Gewichtsprozent Natriumsulfat wasserfrei
35 Gewichtsprozent einer Mischung Carboxymethylcellulose/Methylcellulose
5 Gewichtsprozent Kokosalkyl($C_{12}$)-sulfat, Natriumsalz (ca. 91 Gewichtsprozent WAS)
10 Gewichtsprozent Silikonöl gemäß allgemeiner Formel I

Der "Entschäumer 2" entspricht in seiner Zusammensetzung dem "Entschäumer 1" jedoch wird das Natriumcarbonat nur in einer Menge von 35 Gewichtsprozent eingesetzt und stattdessen in einer abschließenden Verfahrensstufe ein Vinylacetat/Crotonsäure-Copolymeres als filmbildende Polymersubstanz in entsprechender Menge eingearbeitet.

Dem erfindungsgemäßen Entschäumer 1 und 2 werden zwei pulverförmige Waschmittelrezepturen zugegeben, die im nachfolgenden als "Waschmittel I" und "Waschmittel II" bezeichnet sind. Die zugesetzte Entschäumermenge beträgt im Falle des Waschmittels I 0,17 Gewichtsprozent, im Falle des Waschmittels II 0,025 Gewichtsprozent, bezogen jeweils auf den im Entschäumer enthaltenen Silikonölanteil.

Die Zusammensetzung der Waschmittel I und II ist wie folgt: Waschmittel I:

25 Gewichtsprozent Natriumtripolyphosphat

22 Gewichtsprozent Natriumperborat . 4 $H_2O$
18 Gewichtsprozent Natriumsulfat
15 Gewichtsprozent Zeolith NaA (Waschmittelqualität)
5 Gewichtsprozent Natriumwasserglas ($Na_2O$ : $SiO_2$ = 1 : 3,4)
9 Gewichtsprozent Dodecylbenzolsulfonat, Natriumsalz
0,15 Gewichtsprozent Talgfettalkohol ($C_{16-18}$) + 14 EO
1 Gewichtsprozent Fettalkohol ($C_{16-18}$) + 5 EO
0,15 Gewichtsprozent Oleyl-/Cetylalkohol (JZ 50/55) + 55 % EO
1,60 Gewichtsprozent Oleyl-/Cetylalkohol (JZ 50/55) + 50 % EO
3,10 Gewichtsprozent Talgfettsäure ($C_{16-18}$)-Natriumsalz

Waschmittel II:

33,4 Gewichtsprozent Natriumtripolyphosphat wasserfrei
13,2 Gewichtsprozent Zeolith NaA (Waschmittelqualität)
5,1 Gewichtsprozent Natriumcarbonat wasserfrei
15,2 Gewichtsprozent Natriumperborat
10,9 Gewichtsprozent Natriumsulfat wasserfrei
0,7 Gewichtsprozent Carboxymethylcellulose/Methylcellulose
1,5 Gewichtsprozent eines Copolymerisats aus Acrylsäure und Maleinsäure
13,0 Gewichtsprozent Kokosfettalkohol ($C_{12-18}$) + 10 EO
3,5 Gewichtsprozent Talgalkyl ($C_{16-18}$)-sulfat, Natriumsalz (ca. 55 % WAS)
3,5 Gewichtsprozent Dodecylbenzolsulfonat, Natriumsalz (ca. 75 % WAS)

Diese Waschmittel werden in der Labortestwaschmaschine mit 4 g/l dosiert.

Die bei der Austestung in der eingangs beschriebenen Labortestwaschmaschine erhaltenen Schaumnoten - sofort nach der Herstellung des jeweiligen Entschäumers, nach Lagerung von einem Monat und nach der Lagerung von 3 Monaten - sind in den nachfolgenden Tabellen 1 und 2 zusammengefaßt. Tabelle 1 beschreibt dabei die Versuche mit "Waschmittel I", Tabelle 2 die entsprechenden Versuche mit dem "Waschmittel II".

Tabelle 1

| Waschmittel I | | | | |
|---|---|---|---|---|
| | | Ergebnis | | |
| | | 30 °C | 60 °C | 90 °C |
| Entschäumer 1 | sofort nach Herstellung | 0,5 - 1 | 0 - 1 | 0 - 0,5 |
| | nach einem Monat | 1 - 2,5 | 0,5 -1,5 | 0 - 0,5 |
| | nach 3 Monaten | 1 - 3 | 1 - 3 | 0 - 1 |
| Entschäumer 2 | sofort nach Herstellung | 0 - 1 | 0 - 1 | 0 - 0,5 |
| | nach 1 Monat | 1 - 2,5 | 0,5 - 1,5 | 0 - 0,5 |
| | nach 3 Monaten | 1 - 2,5 | 0,5 - 2,5 | 0 - 1 |

Tabelle 2

| Waschmittel II | | | | |
|---|---|---|---|---|
| | | Ergebnis | | |
| | | 30 °C | 60 °C | 90 °C |
| Entschäumer 1 | sofort nach Herstellung<br>nach 1 Monat<br>nach 3 Monaten | 1 - 3<br>3 - 4<br>4 - 5 | 1 - 3<br>2,5 - 4<br>2,5 - 4 | 0 - 1<br>0 - 1,5<br>0,5 - 2 |
| Entschäumer 2 | sofort nach Herstellung<br>nach 1 Monat<br>nach 3 Monaten | 1 - 2,5<br>1,5 - 3<br>1,5 - 3 | 0,5 - 2<br>2 - 3<br>2 - 3 | 0 - 1,5<br>0 - 1,5<br>0 - 2 |

Vergleichsbeispiel 1

Ein nicht in den Rahmen der erfindungsgemäßen Lehre fallender Entschäumer, jedoch auf Basis des gleichen Silikonöls, wird durch Vermischen der folgenden Komponenten hergestellt:

40,3 Gewichtsprozent Natriumsulfat
35,0 Gewichtsprozent Natriumcarbonat
10,0 Gewichtsprozent Natriumwasserglas ($Na_2O : SiO_2$ = 1 : 3,2)
1,0 Gewichtsprozent einer Mischung Carboxymethylcellulose/Methylcellulose
8,0 Gewichtsprozent Silikonöl
5,7 Gewichtsprozent Wasser

Dieser "Entschäumer A" wird in der in den Beispielen 1 und 2 angegebenen Art und Menge mit den Waschmitteln I und II ausgetestet. Die dabei bestimmten Schaumbildungsnoten sind in der nachfolgenden Tabelle 3 zusammengefaßt.

Tabelle 3

| Entschäumer A | | 30 °C | 60 °C | 90 °C |
|---|---|---|---|---|
| Waschmittel I | sofort nach Herstellung<br>nach 3 Monaten | 1 - 2,5<br>4 | 0,5 - 1,5<br>2 - 3 | 0 - 1<br>0 - 1 |
| Waschmittel II | sofort nach Herstellung | 4,5 - 6 | 3,5 - 5 | 0 - 1,5 |

Beispiele 3 bis 7:

Es werden 4 erfindungsgemäße Entschäumer (Entschäumer 3 bis 6) gemäß der folgenden Grundrezeptur hergestellt:

45 Gewichtsprozent Natriumcarbonat wasserfrei
45 Gewichtsprozent Mischung Carboxymethylcellulose/Methylcellulose
5 Gewichtsprozent Silikonöl wie in Beispielen 1 und 2
5 Gewichtsprozent hochschäumendes Tensid

Die in diesen Fällen jeweils eingesetzten Tensidkomponenten sind die Folgenden: Entschäumer 3:
Kokosalkyl ($C_{12}$)-sulfat, Natriumsalz (ca. 91 Gewichtsprozent WAS)
Entschäumer 4:

Kokosalkyl ($C_{10}$)-sulfat, Natriumsalz (ca. 90 Gewichtsprozent WAS)
Entschäumer 5:
Dioctylsulfosuccinat, Natriumsalz (ca. 70 Gewichtsprozent WAS)
Entschäumer 6:
Kokosalkyl ($C_{12-14}$) + 2 EO-sulfat, Natriumsalz (ca. 70 % WAS).

Ein weiterer erfindungsgemäßer Entschäumer 7 wird gemäß der folgenden Rezeptur zusammengemischt. Entschäumer 7:

42,5 Gewichtsprozent Natriumcarbonat wasserfrei
42,5 Gewichtsprozent CMC/MC
10,0 Gewichtsprozent Silikonöl gemäß Beispiel 1 und 2
5,0 Gewichtsprozent Kokosalkyl ($C_{12}$)-sulfat, Natriumsalz.

Zur Austestung der Entschäumungswirkung dieser erfindungsgemäßen Entschäumer wird das nachfolgende pulverförmige "Waschmittel III" eingesetzt (Dosierung in der Labortestwaschmaschine mit 4 g/l). Waschmittel III

30,0 Gewichtsprozent Natriumtripolyphosphat
15,0 Gewichtsprozent Zeolith NaA (Waschmittelqualität)
15,0 Gewichtsprozent Natriumperborat . 4 $H_2O$
5,0 Gewichtsprozent Natriumcarbonat wasserfrei
1,0 Gewichtsprozent einer Mischung Carboxymethylcellulose/Methylcellulose
1,0 Gewichtsprozent Nitrilotriessigsäure
10,0 Gewichtsprozent Dodecylbenzolsulfonat, Natriumsalz (ca. 55 % WAS)
10,0 Gewichtsprozent Kokosfettalkohol ($C_{12-18}$) + 10 EO
Rest Natriumsulfat wasserfrei

Die Entschäumer 3 bis 7 werden dem Waschmittel III jeweils in einer Menge von 0,025 Gewichtsprozent zugesetztes Silikonöl beigemischt. Dem jeweils unmittelbar nach der Entschäumerherstellung in der Labortestwaschmaschine bestimmten Schaumnoten sind in der nachfolgenden Tabelle 4 zusammengefaßt.

Tabelle 4

| | Ergebnis | | |
|---|---|---|---|
| | 30 °C | 60 °C | 90 °C |
| Entschäumer 3 | 1 - 2,5 | 1 - 2,5 | 0 - 1,5 |
| Entschäumer 4 | 1,5 - 2,5 | 0 - 1,5 | 0 - 1 |
| Entschäumer 5 | 1,5 - 2,5 | 1,5 - 2,5 | 0,5 - 1 |
| Entschäumer 6 | 2 | 1,5 - 2 | 0,5 - 1 |
| Entschäumer 7 | 1 - 2 | 0,5 - 1,5 | 0 - 0,5 |

Vergleichsbeispiele 2 bis 7

Es werden vergleichbare Entschäumersubstanzen hergestellt, jedoch werden dabei andere Tensidkomponenten eingesetzt als sie durch die erfindungsgemäße Definition erfaßt sind. Die Entschäumer B bis F (Vergleichsbeispiele 2 bis 6) sind dabei wieder gemäß der nachfolgenden Grundrezeptur zusammengestellt.

45,0 Gewichtsprozent Natriumcarbonat wasserfrei
45,0 Gewichtsprozent einer Mischung Carboxymethylcellulose/Methylcellulose
5,0 Gewichtsprozent Silikonöl gemäß Beispiel 1 und 2
5,0 Gewichtsprozent Tensid

Die in den jeweiligen Fällen eingesetzten Tenside sind wie folgt:

Entschäumer B: Dodecylbenzolsulfonat, Natriumsalz (55 % WAS)
Entschäumer C: alpha-Sulfotalgfettsäure ($C_{16-18}$ 1 : 1)
Dinatriumsalz (ca. 28 % WAS)
Entschäumer D: Talgfettalkohol ($C_{16-18}$) + 30 EO
Entschäumer E: Distearyldimethylammoniumchlorid (ca. 75 % AS)
Entschäumer F: Talgfettsäure ($C_{16-18}$)-Seife, Natriumsalz

Ein weiteres Vergleichsmaterial (Entschäumer G) wird tensidfrei wie folgt zusammengemischt:

47,5 Gewichtsprozent Natriumcarbonat wasserfrei
47,5 Gewichtsprozent CMC/MC
5,0 Gewichtsprozent Silikonöl

Diese zu Vergleichszwecken hergestellten Entschäumer werden gemäß der Arbeitsanweisung aus den Beispielen 3 bis 7 dem Waschmittel III zugemischt, dann werden die Schaumnoten in der Labortestwaschmaschine bestimmt. In allen Fällen betrug die Entschäumerzugabe 0,025 Gewichtsprozent, bezogen auf das zugegebene Silikonöl, die in der Waschmaschine eingesetzte Konzentration des pulverförmigen Waschmittels betrug in allen Fällen 4 g/l.

Die unmittelbar nach der Herstellung der jeweiligen Entschäumergemische bestimmten Schaumnoten sind in der nachfolgenden Tabelle 5 zusammengefaßt.

Tabelle 5

| | Ergebnis | | |
|---|---|---|---|
| | 30 °C | 60 °C | 90 °C |
| Entschäumer B | 3,5 - 4,5 | 1,5 - 3 | 1 - 2 |
| Entschäumer C | 5 - 6 | 4 - 6 | 0,5 - 2 |
| Entschäumer D | 2,5 - 4 | 3,5 | 2 |
| Entschäumer E | 3 - 4 | 3 - 4 | 1- 2 |
| Entschäumer F | 4 - 5 | 3 - 4 | 0 - 1 |
| Entschäumer G | 6 | 6 | 4 - 5 |

Beispiele 8 bis 11

Es werden 4 weitere Entschäumer der erfindungsgemäßen Definition wie folgt zusammengemischt. Entschäumer 8:

45,0 Gewichtsprozent Natriumcarbonat wasserfrei
45,0 Gewichtsprozent CMC/MC
5,0 Gewichtsprozent Silikonöl
5,0 Gewichtsprozent Kokosalkyl ($C_{12}$)-sulfat, Natriumsalz

Entschäumer 9:

60,0 Gewichtsprozent Natriumcarbonat wasserfrei
30,0 Gewichtsprozent CMC/MC
5,0 Gewichtsprozent Silikonöl
5,0 Gewichtsprozent Kokosalkyl ($C_{12}$)-sulfat, Natriumsalz

Entschäumer 10:

30,0 Gewichtsprozent Natriumcarbonat wasserfrei
60,0 Gewichtsprozent CMC/MC

5,0 Gewichtsprozent Silikonöl
5,0 Gewichtsprozent Kokosalkyl ($C_{12}$)-sulfat, Natriumsalz

Entschäumer 11:

40,0 Gewichtsprozent Natriumcarbonat wasserfrei
40,0 Gewichtsprozent CMC/MC
10,0 Gewichtsprozent Natriumsulfat wasserfrei
5,0 Gewichtsprozent Silikonöl
5,0 Gewichtsprozent Kokosalkyl ($C_{12}$)-sulfat Natriumsalz

In allen Fällen wurde das Silikonöl der Beispiele 1 und 2 eingesetzt.

Unter identischen Arbeits- und Einsatzbedingungen gemäß den erfindungsgemäßen Beispielen 3 bis 7 wird die Entschäumungswirkung dieser Komponenten in Abmischung mit dem Waschmittel III bestimmt. Die dabei erhaltenen Werte sind in der nachfolgenden Tabelle 6 zusammengefaßt.

Tabelle 6

| | Ergebnis | | |
|---|---|---|---|
| | 30 °C | 60 °C | 90 °C |
| Entschäumer 8 | 1 - 2,5 | 1 - 2,5 | 0 - 1,5 |
| Entschäumer 9 | 2 - 3 | 0,5 - 2 | 0 - 1,5 |
| Entschäumer 10 | 2 - 3 | 0,5 - 2 | 0 - 1,5 |
| Entschäumer 11 | 0,5 - 1,5 | 0 - 1,5 | 0 - 1 |

Vergleichsbeispiele 8 und 9

Es werden zwei weitere Vergleichssubstanzen - die Entschäumer H und I - in der angegebenen Weise hergestellt. Entschäumer H:

70,0 Gewichtsprozent Natriumsulfat wasserfrei
20,0 Gewichtsprozent Zeolith NaA (Waschmittelqualität)
5,0 Gewichtsprozent Silikonöl
5,0 Gewichtsprozent Kokosalkyl ($C_{12}$)-sulfat, Natriumsalz

Entschäumer I:

85,0 Gewichtsprozent Natriumsulfat wasserfrei
5,0 Gewichtsprozent gefällte Kieselsäure
5,0 Gewichtsprozent Silikonöl
5,0 Gewichtsprozent Kokosalkyl ($C_{12}$)-sulfat, Natriumsalz

Auch in diesen Fällen entspricht das eingesetzte Silikonöl dem Material der Beispiele 1 und 2.

Unter identischen Anwendungs- und Einsatzmengen werden diese Vergleichssubstanzen H und J im Waschmittel III auf ihre Entschäumungswirkung ausgetestet. Die ermittelten Schaumnoten sind in der nachfolgenden Tabelle 7 zusammengefaßt.

Tabelle 7

| | Ergebnis | | |
|---|---|---|---|
| | 30 °C | 60 °C | 90 °C |
| Entschäumer H | 6 | 4 - 5 | 0,5 - 1,5 |
| Entschäumer I | 4 - 6 | 4 - 5 | 1 - 2 |

## Ansprüche

1. Feste schütt- und rieselfähige Zusatzmittel zur Schaumverhütung bzw. Schaumdämpfung, insbesondere für den Einsatz in Wasch- und Reinigungsmitteln für Textilien, enthaltend Silikonverbindungen mit schaumdämpfender bzw. schauminhibierender Wirkung, aufgetragen auf ein pulverförmiges wasserlösliches und/oder wasserdispergierbares Trägersubstrat auf Cellulosebasis in Abmischung mit wasserlöslichen anorganischen Salzen und Dispergierhilfsmitteln auf Tensidbasis, dadurch gekennzeichnet, daß in das Trägersubstrat hochschäumende Aniontenside aus den Klassen Alkylsulfate, Alkylethersulfate und/oder Alpha-Sulfobernsteinsäureester in Pulverform eingearbeitet sind.

2. Schaumdämpfende Zusatzmittel nach Anspruch 1, dadurch gekennzeichnet, daß die pulverförmigen Aniontenside als wasserlösliche Alkali-, Ammonium- und/oder Aminsalze vorliegen.

3. Schaumdämpfende Zusatzmittel nach den Ansprüchen 1 und 2, dadurch gekennzeichnet, daß sie 3 bis 15 Gew.-% Silikonverbindungen zusammen mit 3 bis 20 Gew.-% der hochschäumenden pulverförmigen Aniontenside und zum Rest die weiteren Komponenten des Trägersubstrats enthalten - Gew.-% berechnet jeweils auf Gesamtgewicht des schüttfähigen Zusatzmittels.

4. Schaumdämpfende Zusatzmittel nach den Ansprüchen 1 bis 3, dadurch gekennzeichnet, daß sie 5 bis 10 Gew.-% Silikonverbindungen zusammen mit 5 bis 10 Gew.-% des pulverförmigen Aniontensids und 80 bis 90 Gew.-% des restlichen Trägersubstrats enthalten.

5. Schaumdämpfende Zusatzmittel nach den Ansprüchen 1 bis 4, dadurch gekennzeichnet, daß sie Alkylsulfate des Bereichs von $C_{8-18}$, insbesondere $C_{8-14}$, Alkylethersulfate des Bereichs von $C_{8-18}$ mit 1 bis 4 EO-Gruppen und/oder Alpha-Sulfobernsteinsäureestersalze mit $C_{8-18}$ in den Ester-Alkoholgruppen enthalten.

6. Schaumdämpfende Zusatzmittel nach den Ansprüchen 1 bis 5, dadurch gekennzeichnet, daß die Aniontenside sich von Fettalkoholen natürlichen und/oder synthetischen Ursprungs ableiten, dabei verzweigt oder unverzweigt und gegebenenfalls auch ungesättigt sind und bevorzugt Alkylsulfate, abgeleitet von Kokosfettalkohol, sind.

7. Schaumdämpfende Zusatzmittel nach den Ansprüchen 1 bis 6 dadurch gekennzeichnet, daß als anorganisches Salz im Trägersubstrat wenigstens anteilsweise Natriumcarbonat vorliegt.

8. Schaumdämpfende Zusatzmittel nach den Ansprüchen 1 bis 7, dadurch gekennzeichnet, daß das Trägersubstrat als wasserlösliche und/oder wasserdispergierbare Celluloseverbindungen Carboxymethylcellulose und/oder Methylcellulose, bevorzugt zusammen mit Natriumcarbonat und gegebenenfalls Natriumsulfat als anorganische Salze enthält, wobei das Gewichtsverhältnis dieser organischen und anorganischen Komponenten zueinander etwa im Bereich von 70 : 30 bis 30 : 70 liegt.

9. Schaumdämpfende Zusatzmittel nach den Ansprüchen 1 bis 8, dadurch gekennzeichnet, daß sie als Silikonverbindung Silikonöle der allgemeinen Formel I

$$\begin{array}{ccc} CH_3 & CH3 & CH_3 \\ CH_3\text{-}Si\text{-}O & Si\text{-}O & Si\text{-}CH_3 \\ CH_3 & CH_3\ {}_x & CH_3 \end{array} \qquad (I)$$

enthalten, wobei x im Zahlenmittel einen Wert von 50 bis 2500, vorzugsweise von 500 bis 1 000 bedeutet

und wobei diese Siloxanverbindungen auch in an sich bekannter Weise mit gefällter oder pyrogener Kieselsäure - vorzugsweise in Mengen von etwa 2 bis 12 Gew.-% - aktiviert sein können.

10. Schaumdämpfende Zusatzmittel nach den Ansprüchen 1 bis 9, dadurch gekennzeichnet, daß das silikonhaltige kornförmige Entschäumermaterial zusätzlich mit alkalilöslichen und/oder wässrig-alkalisch dispergierbaren synthetischen Polymerverbindungen versetzt, insbesondere wenigstens anteilsweise umhüllt ist.

11. Schaumdämpfende Zusatzmittel nach Anspruch 10, dadurch gekennzeichnet, das sie als synthetische Polymerverbindungen Copolymerisate von Vinylestern, (Meth)-Acrylsäureestern und/oder Vinylethern mit copolymerisierbaren ungesättigten niederen Carbonsäuren enthalten, wobei die Menge dieser synthetischen Polymerverbindungen bevorzugt unterhalb 10 Gew.-% und insbesondere unterhalb 7 Gew.-% - bezogen auf das Gesamtprodukt - liegt.

12. Schaumdämpfende Zusatzmittel nach den Ansprüchen 1 bis 11, dadurch gekennzeichnet, daß sie durch mechanisches Vermischen der Komponenten, insbesondere im Bereich der Raumtemperatur hergestellt worden sind, wobei bevorzugt die folgende Reihenfolge in der Zugabe zur Mischvorrichtung eingehalten worden ist:
Vormischen der organischen und anorganischen Komponenten des Trägersubstrats, Zugabe und Einmischung der pulverförmigen aniontensidischen Komponente, Zugabe der Silikonverbindung und abschließendes Einarbeiten der synthetischen Polymerverbindung.